Europäisches Patentamt

European Patent Office

Office européen des brevets

(11) Veröffentlichungsnummer: **0 271 886**
**A2**

# EUROPÄISCHE PATENTANMELDUNG

(21) Anmeldenummer: 87118614.4

(51) Int. Cl.⁴ **F24D 13/02**

(22) Anmeldetag: **15.12.87**

(30) Priorität: **17.12.86 DE 8633658 U**

(43) Veröffentlichungstag der Anmeldung:
**22.06.88 Patentblatt 88/25**

(84) Benannte Vertragsstaaten:
**AT BE CH DE ES FR LI LU NL**

(71) Anmelder: **Schweiger, Friedrich**
**Quellweg 5**
**D-8500 Nürnberg 90(DE)**

(72) Erfinder: **Schweiger, Friedrich**
**Quellweg 5**
**D-8500 Nürnberg 90(DE)**

(74) Vertreter: **Hammermann, Herbert**
**Schlegelstrasse 17**
**D-8500 Nürnberg(DE)**

(54) **Heizungseinrichtung.**

(57) Die Erfindung betrifft eine Heizungseinrichtung umfassend eine wärmeübertragungsplatte aus Stein, insbesondere Naturstein, mit wenigstens einem daran angeordnete elektrische Anschlußeinrichtungen aufweisenden Widerstandsheizdraht, wobei an der der Sichtseite der Wärmeübertragungsplatte (2) abgewandten Rückseite an eine, die Heizanordnung (4) tragende Wärmeverteilplatte (3) aus Metall angeordnet ist.

FIG. 2

EP 0 271 886 A2

### Heizungseinrichtung

Die Erfindung richtet sich auf eine Heizungseinrichtung umfassend eine Wärmeübertragungsplatte aus Stein, insbesondere Naturstein, mit wenigstens einem daran angeordneten, elektrische Anschlußeinrichtungen aufweisenden Widerstandsheizdraht.

Derartige Heizungseinrichtungen kombinieren die ästhetischen Vorteile einer Natursteinverkleidung mit den heizungstechnischen Vorzügen einer elektrischen Heizung. Insbesondere lassen sich derartige Heizungseinrichtungen mit unbeheizten Natursteinplatten so räumlich verteilt kombinieren, daß für den jeweiligen Zweck eine optimale Wärmeverteilung im Raum erzielt wird. Durch die abgegebene Wärmestrahlung wird zudem ein über die objektive Raumtemperatur hinausgehendes subjektives Wärmeempfinden bedingt, so daß auf diese Weise eine energietechnisch und physioligisch optimale Raumbeheizung geschaffen wird.

Bekannte derartige Heizungseinrichtungen sind so ausgestaltet, daß in die Rückseite einer Natursteinträgerplatte sich überlappende, kreisförmige Einfräsungen eingebracht, oder als Steinlaminat hergestellt werden, in welche Heizdrähte verlegt werden, wobei dann die so gebildeten Platten wieder vergossen oder verklebt und verschraubt werden.

Die Nachteile derartiger Heizeinrichtungen liegen darin, daß ein erheblicher Teil der Wärme nicht zur Sichtseite der Wärmeübertragungsplatte hin, also in Richtung des zu beheizenden Raumes, sondern in die Wand abgestrahlt wird, was nicht nur zu Schäden im Mauerwerk bzw. im Verputz führen kann, sondern im Hinblick auf den damit einhergehenden Energieverlust grundsätzlich nicht wünschenswert ist. Aufgrund der spezifischen Ausgestaltung der bekannten Anordnungen lassen sich diese nicht reparieren, wenn ein Heizdraht durchbrennt, so daß der Ersatz einer vollständigen Wärmeübertragungsplatte mit Heizdrähten in Kauf genommen werden müßte. Letztlich ist es bei derartigen Anordnungen auch nicht möglich, eine wirksame thermische Überwachung vorzusehen, so daß beim Überschreiten einer bestimmten Temperatur eine Abschaltung vorgenommen wird.

Der Erfindung liegt die Aufgabe zugrunde, eine Heizungseinrichtung der eingangs genannten Art so auszugestalten, daß sie bei kostengünstiger Herstellung montagetechnisch einfach installiert und gewartet werden kann und darüber hinaus ein vorteilhaftes Heiz-und Regelverhalten aufweist.

Diese Aufgabe wird dadurch gelöst, daß an der der Sichtseite der Wärmeübertragungsplatte abgewandten Rückseite der Wärmeübertragungsplatte eine die Heizanordnung tragende Wärmeverteil-Platte aus Metall angeordnet ist.

Durch diese Konstruktion werden starke lokale Erwärmungen der Wärmeübertragungsplatte vermieden, so daß diese auch bei raschen Temperaturwechseln nicht springen kann. Im Falle einer mechanischen Beschädigung der Wärmeübertragungsplatte kommen die Heizdrähte trotzdem nicht in direkten Kontakt mit einer gegebenenfalls bestehenden Raumfeuchtigkeit, was insbesondere bei der Beheizung von Bädern unter sicherheitstechnischen Aspekten von großer Bedeutung ist. Die Wärmeverteilplatte stellt aber nicht nur eine gleichmäßige Wärmeverteilung und Wärmeübertragung auf die Wärmeübertragungsplatte sicher, sondern dient gleichzeitig als Träger für die Heizanordnung, welche sich einfach an dieser Metallplatte befestigen läßt.

Vorteilhafterweise ist die Heizanordnung durch eine Mehrzahl von auf Halterungen der Wärmeverteilplatte aufsteckbare Heizdrahtwendeln gebildet. die einzelnen Wendeln können dabei jeweils eine individuelle Halterung aufweisen. Durch diese Art der Befestigung ist es möglich, Heizungseinrichtungen mit einer gewünschten Leistung unter Verwendung baukastenartiger Module herzustellen.

Am einfachsten werden die Halterungen durch Z-Profile gebildet, welche mit der Wärmeverteilplatte verbunden sind. Die Heizdrahtwendeln können dann mit ihren Trägern in eine rechteckige Anordnung von drei derartigen Z-Profilen eingeschoben werden und sind damit bereits formschlüssig festgelegt. Eine endgültige Fixierung kann mittels einer Schraube od. dgl. erfolgen.

In weiterer Ausgestaltung der Erfindung ist vorgesehen, daß die Heizanordnung von einem mit der Wärmeverteilplatte dichtend verbundenen Isoliergehäuse umgeben ist. Hierdurch wird eine Abkapselung der Heizanordnung erreicht und gleichzeitig verhindert, daß die Wärme in Richtung Wand abgestrahlt wird.

Die Heizanordnung kann mittels das Isoliergehäuse umgreifender Z-Profile mit der Wärmeübertragungsplatte verschraubt werden. Dementsprechend kann an eine Wärmeübertragungsplatte eine komplette, vormontierte Heizanordnung angebracht werden, welche entsprechend der gewünschten Leistung individuell bestückt ist.

Eine alternative Realisierungsmöglichkeit der Heizanordnung besteht darin, daß auf der Wärmeübertragungsplatte eine Mehrzahl von Isolatoren befestigt und ein Widerstandsheizdraht um diese Isolatoren geschlungen ist.

Eine weitere Variante besteht darin, daß auf der Rückseite der Wärmeübertragungsplatte eine Folie mit Widerstandsheizbahnen aufgebracht ist, wobei hierdurch eine besonders flache Bautiefe erreicht wird und Folien mit einer entsprechenden Leistung neuerdings zu vertretbarem Preis zur Verfügung stehen.

Weitere Merkmale, Vorteile und Einzelheiten der Erfindung ergeben sich aus der folgenden Beschreibung einer bevorzugten Ausführungsform anhand der Zeichnung.

Dabei zeigen:

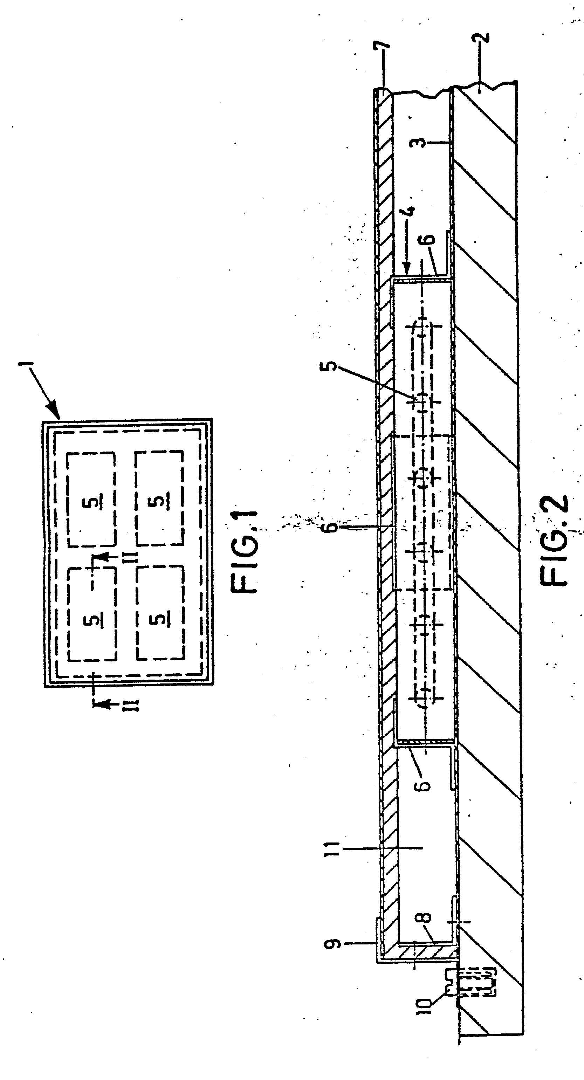

Fig. 1 eine schematische Aufsicht auf eine erfindungsgemäße Heizungseinrichtung und

Fig. 2 einen schematischen Teilschnitt längs der Linie II-II in Fig. 1.

Eine in der Zeichnung dargestellte Heizungseinrichtung 1 umfaßt eine Wärmeübertragungsplatte 2 aus Naturstein, auf welcher eine Wärmeverteilplatte 3 aus Metall angeordnet ist.

Auf der Wärmeverteilplatte 3 sind als Heizungsanordnung 4 vier Heidrahtwendeln 5 mit einem im einzelnen nicht dargestellten Träger angeordnet. Die Heizdrahtwendeln 5 sind in rechtwinklige Z-Profile 6 eingeschoben, welche unter Ausbildung einer U-Konfiguration so angeordnet sind, daß eine freie Einschubseite offen bleibt. Nach Einschieben der Heizdrahtwelndeln 5 übergreift der oberste Schenkel der Z-Profile den Träger der Heizdrahtwendeln, ein vertikaler Abschnitt legt den Träger seitlich fest, während ein unterer horizontaler Schenkelabschnitt der Z-Profile 6 zur Verbindung mit der Wärmeverteilplatte 3 dient.

Mit der Wärmeverteilplatte 3 ist ein geschlossenes Isoliergehäuse 7 über L-förmige Profile 8 dichtend verbunden. Die so gebildete, aus dem Isoliergehäuse 7 und der Wärmeverteilplatte 3 bestehende Anordnung wird mittels weiterer, rechtwinkliger Z-Profile 9 und Schrauben 10 mit der Wärmeübertragungsplatte 2 verbunden.

Eine hierdurch gebildete vollständige Heizeinrichtung 1 kann mittels im einzelnen nicht dargestellter Trägeransätze in korrespondierende Befestigungseinrichtungen an der Wand eingehängt werden. Hierdurch ist erforderlichenfalls eine leichte Abnahme der Heizungseinrichtung zu Reparaturzwecken möglich.

In dem zwischen dem Isoliergehäuse 7 und der Wärmeverteilplatte 3 ausgebildeten abgeschlossenen Raum 11 können zur Temperaturüberwachung Thermoschalter angeordnet werden, so daß eine zuverlässige Sicherung und auch Regelung erreicht werden kann.

## Ansprüche

1. Heizungseinrichtung umfassend eine Wärmeübertragungsplatte aus Stein, insbesondere Naturstein, mit wenigstens einem daran angeordneten, elektrische Anschlußeinrichtungen aufweisenden Widerstandsheizdraht, **dadurch gekennzeichnet,** daß an der der Sichtseite der Wärmeübertragungsplatte (2) abgewandten Rückseite der Wärmeübertragungsplatte (2) eine, die Heizanordnung (4) tragende Wärmeverteilplatte (3) aus Metall angeordnet ist.

2. Heizungseinrichtung nach Anspruch 1, **dadurch gekennzeichnet,** daß die Heizanordnung (4) durch eine Mehrzahl von auf Halterungen der Wärmeverteilplatte (3) aufsteckbare Heizdrahtwendeln (5) gebildet ist.

3. Heizungseinrichtung nach Anspruch 2, **dadurch gekennzeichnet,** daß die Halterungen durch Z-Profile (6) gebildet sind.

4. Heizungseinrichtung nach einem der Ansprüche 1 bis 3, **dadurch gekennzeichnet,** daß die Heizanordnung (4) von einem mit der Wärmeverteilplatte (3) dichtend verbundenen Isoliergehäuse (7) umgeben ist.

5. Heizungseinrichtung nach Anspruch 4, **dadurch gekennzeichnet,** daß die Heizanordnung (4) mittels das Isoliergehäuse (7) umgreifender Z-Profile (9) mit der Wärmeübertragungsplatte (2) verbunden ist.

6. Heizungseinrichtung, insbesondere nach Anspruch 1, **dadurch gekennzeichnet,** daß auf der Wärmeübertragungsplatte eine Mehrzahl von Isolatoren befestigt und ein Widerstandsheizdraht um diese Isolatoren geschlungen ist.

7. Heizungseinrichtung, insbesondere nach Anspruch 1, **dadurch gekennzeichnet,** daß auf der Wärmeübertragungsplatte eine Folie mit Widerstandsheizbahnen aufgebracht ist.

0 271 886

FIG.1

FIG.2